# EUROPEAN PATENT APPLICATION

(11) **EP 2 392 995 A1**
(43) Date of publication of application: **07.12.2011**
(21) Application number: 10164923.4
(22) Date of filing: 04.06.2010
(51) Int. Cl.: G06F 3/041, G06F 3/047, G06F 3/048, G06F 3/03, G06F 3/033

(54) **Portable electronic device and method of controlling same**

(71) Applicant: RESEARCH IN MOTION LIMITED, Waterloo, Ontario N2L 3W8 (CA)
(72) Inventor: Griffin, Jason Tyler, Waterloo Ontario N2L 3W8 (CA); Steele, Joel Paul, Mississauga Ontario L4W 0B4 (CA)
(74) Representative: Phillips, Emily Elizabeth

(57) **Abstract**

A method includes displaying a selectable feature on a display of an electronic device, detecting a touch on a touch-sensitive input device, wherein the touch is associated with the selectable feature, and displaying a preview of information from an application associated with the selectable feature.

## Description

### FIELD OF TECHNOLOGY

The present disclosure relates to electronic devices, including but not limited to, portable electronic devices having touch-sensitive input devices and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. Touch-sensitive input devices such as a touch-sensitive display, also known as a touchscreen display, are particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in electronic devices are desirable.

### SUMMARY

A method includes displaying a selectable feature on a display of an electronic device, detecting a touch on a touch-sensitive input device, the touch associated with the selectable feature, and displaying a preview of information from an application associated with the selectable feature. An electronic device includes a display configured to display a selectable feature, a touch-sensitive input device arranged and constructed to detect a touch thereon, and a processor operably coupled to the display and the input device to display a preview of information from an application associated with the selectable feature when the touch is associated with the selectable feature.

### BRIEF DESCRIPTION OF THE DRAWINGS

FIG. 1 is a block diagram of a portable electronic device in accordance with the present disclosure.

FIG. 2 is a flowchart illustrating a method of controlling a portable electronic device in accordance with the present disclosure.

FIG. 3 and FIG. 4 illustrate examples of electronic devices during control of the electronic device to display a preview in accordance with the present disclosure.

### DETAILED DESCRIPTION

The following describes an electronic device and a method including displaying a selectable feature on a display of an electronic device, detecting a touch on a touch-sensitive input device, the touch associated with the selectable feature, and displaying a preview of information from an application associated with the selectable feature.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

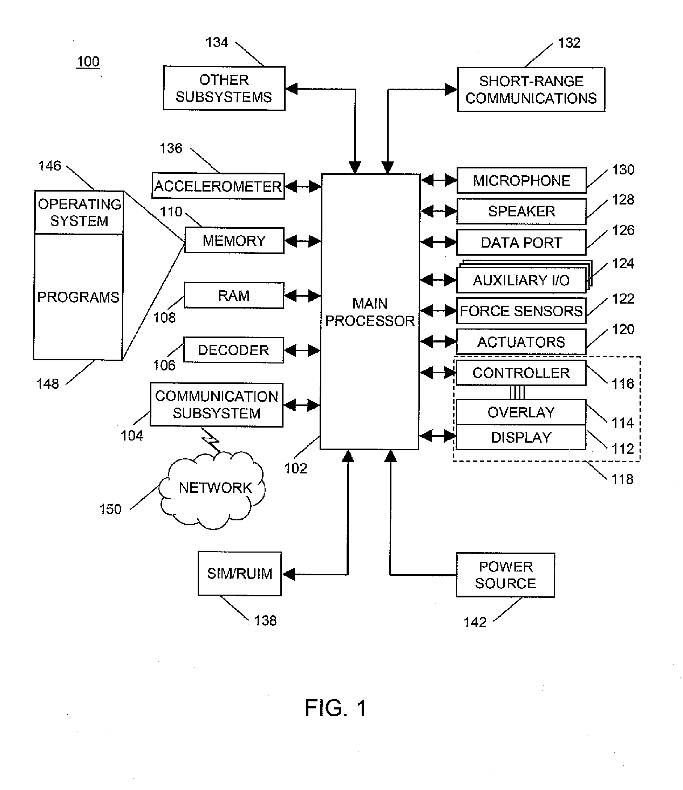

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. The controller 116 and/or the processor 102 may detect a touch by any suitable contact member on the touch-sensitive display 118. Multiple simultaneous touches may be detected.

The actuator(s) 120 may be actuated by applying sufficient force to the touch-sensitive display 118 to meet the threshold actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback. When force is applied, the touch-sensitive display 118 is depressible, pivotable, and/or movable.

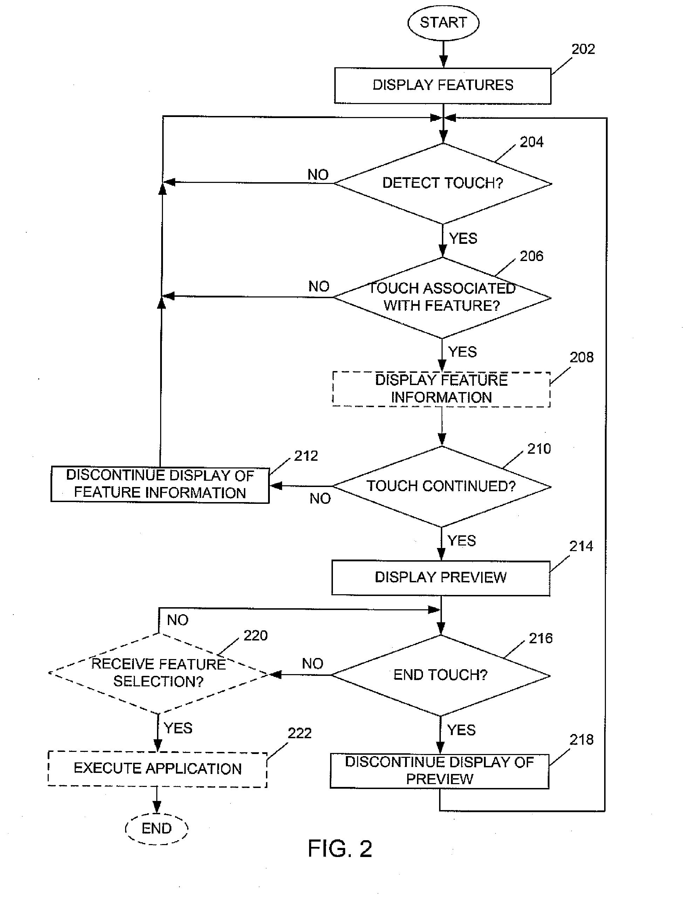

A flowchart illustrating a method of controlling an electronic device, such as the portable electronic device 100, is shown in FIG. 2. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. A computer-readable medium having computer-readable code executable by at least one processor of a portable electronic device may be utilized to perform the method.

Selectable features are displayed 202 on the display 112. The selectable features may include, for example, icons or characters such as symbols or alphanumeric characters. The selectable features are associated with one or more applications such as an email application, a calendar application, an address book application, a web browser application, a media player application, a phone application, and so forth.

When a touch is detected 204 on a touch-sensitive input device, the process continues at 206. The touch-sensitive input device may be, for example, a touch-sensitive overlay such as the overlay 114 of the touch-sensitive display 118, a touch-sensitive track pad, a touch-sensitive trackball, touch-sensitive keys, or an optical joystick. These input devices may be part of the auxiliary I/O subsystem 124. When the touch is not associated with one of the selectable features at 206, the process continues at 204. When the touch is associated with one of the selectable features at 206, feature information, such as a title or label for the selectable feature may optionally be displayed 208. The touch may be associated with the feature when a location of the touch on the touch-sensitive display 118 is associated with the feature. Alternatively, the touch may be associated with the feature when a cursor, highlighter, or other suitable indicator is at a location associated with the feature during the touch. The title or label may be displayed in a tooltip, for example.

When the touch is discontinued such that the touch ends prior to exceeding a threshold at 210, display of the feature information is discontinued 212. The threshold may be any suitable threshold, for example, 2 seconds. The period of time during which the touch is detected may be determined in any suitable manner such as, for example, utilizing a count-up timer followed by comparison to the threshold or utilizing a count-down timer starting at a time equivalent to the threshold. The timer may begin timing when a touch is detected at 204.

When the touch continues to be detected for a period of time that exceeds the threshold at 210, a preview is displayed 214. The preview is advantageously displayed without executing the associated application. The preview may be, for example, a partial view of information stored in association with the application. The information may be retrieved from data records stored on the device 100. For example, email messages, may be stored as data records in memory 110 and data from these data records may be retrieved. Many different previews are possible for each application. For example, a preview of an email application may include information from the last three email messages received. Information from a limited number of fields stored in the email messages may be included in the preview. A preview of a calendar application may include information from calendar records stored on the electronic device 100 for calendar events occurring, e.g., within the next 24 hours. A preview of an address book application may include information from the most recent contact viewed in the address book application. A preview of the web browser application may include a list of bookmarked websites or the most-recent websites browsed. A preview of the media player application may include fields from the two songs played most frequently or the three most-recent songs played. A preview of the phone application may include a list of the most frequently dialed phone numbers or a list of recently missed calls. Previews for the email application, calendar application, address book application, web browser application, media player application, and phone application are not limited to the examples provided. Other features may also be displayed at 202, and suitable previews may be provided. A user may select how many items are previewed and the nature of the items previewed. These selections may be stored, for example, in a preview options profile.

When the touch ends at 216, display of the preview is discontinued 218 and the process continues at 204. Display of the preview may be discontinued immediately upon detection of the end of the touch or may be discontinued a short period of time of after the end of the touch. A suitable short period of time after which display of the preview is discontinued may be, for example, 2 seconds. Discontinuing display of the preview may be gradual, for example, the preview may fade from the display 112. When the touch does not end at 216, i.e., the touch continues, the process continues at 220. When the selectable feature is selected 220, the associated application is executed 222. The feature may be selected by, for example, depressing the touch-sensitive input device. Alternatively, the feature may be selected by depressing a button or other input device while the touch is detected. Optionally, the portable electronic device 100 may await the end of the touch at 216, rather than detecting when feature selection is received. For example, the touch may end prior to selection of a feature to execute an application. A feature may be alternatively be selected when a tap, or touch of short duration, is detected at an area associated with the feature on the touch-sensitive display 118 or by highlighting the feature utilizing the optical joystick or touch-sensitive track pad followed by a tap on the optical joystick or touch-sensitive track pad.

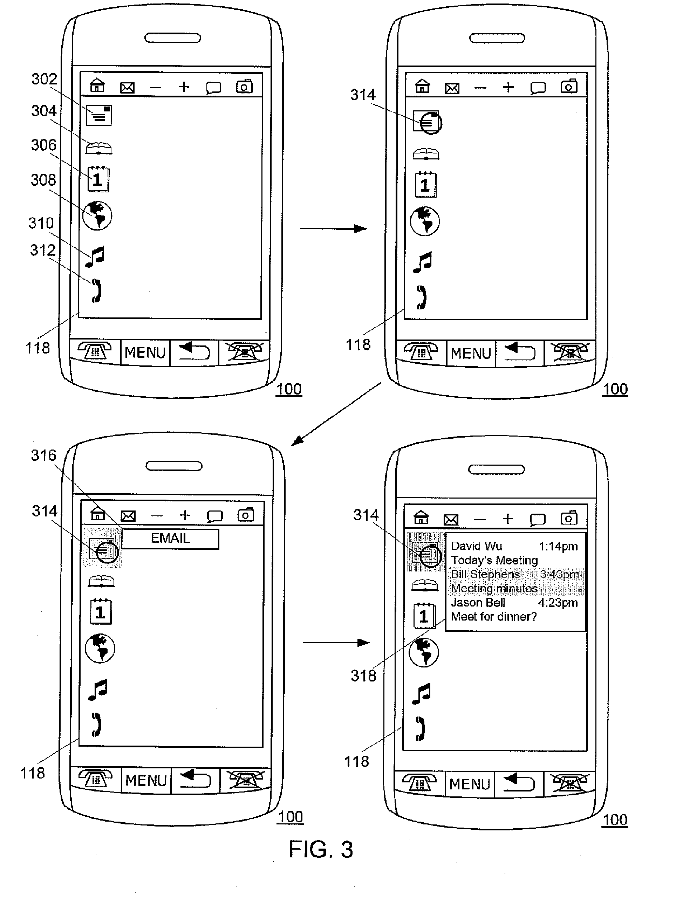

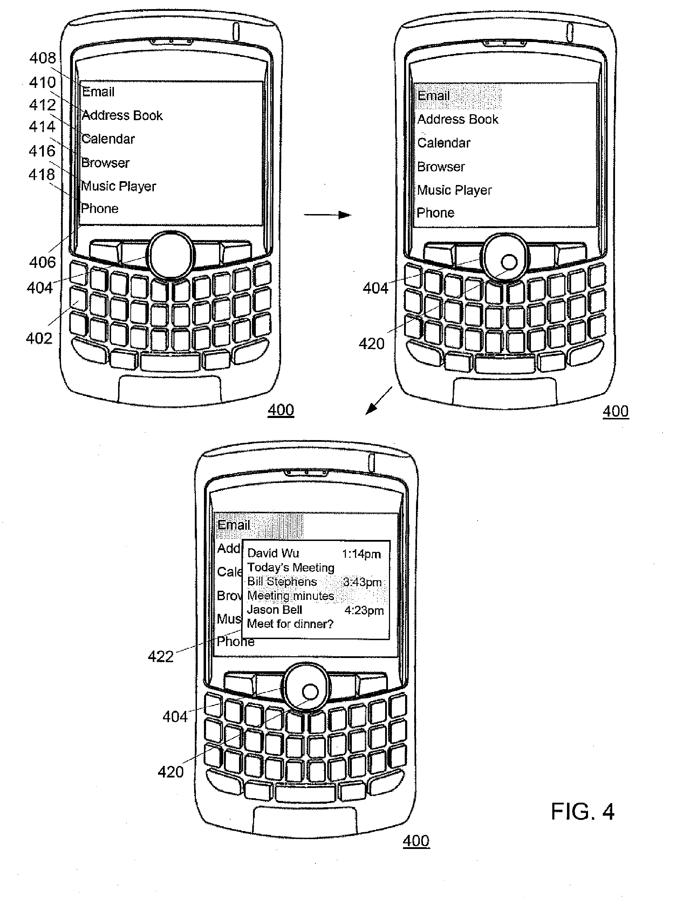

Examples of an electronic device during display of selectable features and during display of a preview are shown in FIG. 3 and FIG. 4. In the example of FIG. 3, the portable electronic device 100 includes the touch-sensitive display 118 and is utilized for displaying selectable features including icons, as shown in the electronic device illustrated in the upper, left device 100 of FIG. 3. The icons shown include an email icon 302 associated with an email application, an address book icon 304 associated with an address book application, a calendar icon 306 associated with a calendar application, a web browser icon 308 associated with a web browser application, a music icon 310 associated with a music player application, and a telephone icon 312 associated with a cell phone application. Although the icons are shown in a vertical orientation with respect to the device 100, the icons may be displayed in a horizontal orientation, e.g., across the bottom of the display.

A touch is detected at a location 314 that is associated with the email application, as shown in the electronic device illustrated in the upper, right device 100 of FIG. 3. Feature information is optionally displayed, for example, as a tooltip 316 as shown in the electronic device illustrated in the lower, left device 100 of FIG. 3. The tooltip 316 includes the title "EMAIL" for identification of the icon 302. The touch on the touch-sensitive display 118 is detected for more than 2 seconds and the preview 318 is displayed as shown in the electronic device illustrated in the lower, right device 100 of FIG. 3. In the example of FIG. 3, the preview includes information from fields of the last three email messages, including information from a sender field, information from a time of receipt field, and information from a subject field of the email messages. Display of the preview is discontinued in response to detection of the end of the touch. Although the preview is shown in FIG. 3 displayed next to the icons, the information may be displayed in place of or on top of the icons. The icons may be ghosted. Alternatively, the preview may be ghosted.

In the example of FIG. 4, a portable electronic device 400 includes a keyboard 402 and an optical joystick 404, also referred to as an optical input device, for controlling, for example, highlighting on the display 406. The remainder of the features of the portable electronic device 400 may be similar to those described above. A touch may be detected by the optical joystick 404 and processed by the processor, for example, to determine attributes of the touch including the touch location. Movement of the touch may also be detected by the optical joystick 404.

The portable electronic device is utilized for displaying selectable features including characters, e.g., alphanumerical representations of applications, as shown in the electronic device illustrated in the upper, left device 400 of FIG. 4. The representations shown in the example of FIG. 4 include a "Email" representation 408, an "Address Book" representation 410, a "Calendar" representation 412, a Browser" representation 414, a "Music Player" representation 416, and a "Phone" representation 418, each associated with a respective application.

A touch is detected by the optical joystick 404. The touch moves such that the highlighting on the display 406 is associated with the email application, as shown in the electronic device illustrated in the upper, right device 400 of FIG. 4. Feature information is not displayed in the example of FIG. 4. A touch on the optical joystick 404 is detected for more than 2 seconds and the preview 422 is displayed as shown in the electronic device illustrated in the lower center of FIG. 4. In the example of FIG. 4, the preview includes information from the last three email messages, including, for example, information from a sender field, information from a time of receipt field, and information from a subject field of the email messages. Display of the preview is discontinued in response to detection of the end of the touch. Optionally, the preview may be displayed for a predetermined period of time.

Optionally, information may be previewed from more than one application. For example, when a touch is detected on an icon, information may be displayed for the application associated with that icon as well as one or two other applications. The preview for multiple applications may be displayed simultaneously or sequentially, e.g., email preview followed by calendar preview followed by phone preview. Multiple previews may be provided, for example, as long as a touch is detected. A user may select which applications are part of a multiple-application preview. When a continued touch is detected for one of the icons associated with any of these applications, a multiple-application preview may be initiated, beginning with the application associated with the icon associated with the touch. Alternatively, a touch on a special icon or area on the display may initiate a multiple-application preview.

Alternatively, the portable electronic device 100, 400 may include an additional display for providing a larger overall display area. In this example, a touch may be detected on the touch-sensitive display, at a location that is associated with an application. Feature information may be displayed as a tooltip on the touch-sensitive display or on the additional display. In response to detecting the touch for more than 2 seconds, the preview is displayed on the additional display, rather than obscuring the information displayed on the touch-sensitive display.

The control of the electronic device as described herein facilitates the display of information without executing a program. The display of information without executing the associated application may decrease device use time, decrease user wait time for information, and decrease power consumption. The length of time that the information is displayed may be based on the length of time that touch is detected by the touch-sensitive input device.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying a selectable feature on a display of an electronic device;
detecting a touch on a touch-sensitive input device, wherein the touch is associated with the selectable feature;
displaying a preview of information from an application associated with the selectable feature.

2. The method according to claim 1, comprising discontinuing displaying the preview in response to detecting an end of the touch on the touch-sensitive input device.

3. The method according to claim 1, wherein displaying comprises displaying the preview without executing the application.

4. The method according to claim 1, comprising displaying feature information in response to detecting the touch and either prior to displaying the preview or wherein displaying the preview comprises displaying the preview in response to detecting continuation of the touch.

5. The method according to claim 1, comprising executing the application when an input is received to execute the application or in response to depression of the touch-sensitive input device.

6. The method according to claim 1, wherein displaying the preview of information comprises displaying information from at least one record stored in a database in relation to the application or from a field of at least one record stored in a database in relation to the application.

7. The method according to claim 1, wherein the touch-sensitive input device comprises one of a touch-sensitive overlay, a touch-sensitive track pad, and an optical joystick.

8. A computer-readable medium having computer-readable code executable by at least one processor of a portable electronic device to perform the method of claim 1.

9. An electronic device comprising:
a display configured to display a selectable feature;
a touch-sensitive input device arranged and constructed to detect a touch thereon;
a processor operably coupled to the display and the input device to display a preview of information from an application associated with the selectable feature when the touch is associated with the selectable feature.

10. The electronic device according to claim 9, wherein display of the preview is discontinued in response to the touch-sensitive input device detecting an end of the touch.

11. The electronic device according to claim 9, wherein the preview is displayed without executing the application or the preview is displayed when continuation of the touch is detected and after feature information is displayed.

12. The electronic device according to claim 9, wherein the touch-sensitive input device comprises one of a touch-sensitive overlay, a touch-sensitive track pad, and an optical joystick.

13. The electronic device according to claim 9, comprising an actuator, actuatable in response to a force applied to the touch-sensitive input device that exceeds a threshold value.

14. The electronic device according to claim 9, wherein the application is executed by the processor in response to actuation of an actuator.

15. The electronic device according to claim 9, comprising a memory having at least one record stored in relation to the application, the preview of information comprising information from at least one record or from a field of at least one record.

## Amended claims

### Amended claims in accordance with Rule 137(2) EPC.

**1.** A method comprising:
displaying (202) a selectable feature on a display of an electronic device (100);
detecting a touch on a touch-sensitive input device (118), wherein the touch is associated with the selectable feature;
displaying (214) a preview of information from an application associated with the selectable feature without executing the application.

**2.** The method according to claim 1, comprising discontinuing (218) displaying the preview in response to detecting an end of the touch on the touch-sensitive input device (118).

**3.** The method according to claim 1, comprising displaying (208) feature information in response to detecting the touch and prior to displaying the preview.

**4.** The method according to claim 1, comprising displaying (208) feature information in response to detecting the touch and wherein displaying the preview comprises displaying the preview in response to detecting continuation of the touch.

**5.** The method according to any one of claims 1 to 4, comprising executing (222) the application when an input is received to execute the application.

**6.** The method according to claim 1, wherein displaying (218) the preview of information comprises displaying information from at least one record stored in a database in relation to the application.

**7.** The method according to claim 1, wherein displaying (218) the preview of information comprises displaying information from a field of at least one record stored in a database in relation to the application.

**8.** The method according to any one of claims 1 to 7, wherein the touch-sensitive input device comprises one of a touch-sensitive overlay, a touch-sensitive track pad, and an optical joystick.

**9.** The method according to any one of claims 1 to 8, comprising executing (222) the application in response depression of the touch-sensitive input device (118).

**10.** A computer-readable medium having computer-readable code executable by at least one processor (102) of a portable electronic device (100) to perform the method of any of claims 1 to 9.

**11.** An electronic device (100) comprising:
a display (112) configured to display a selectable feature;
a touch-sensitive input device (118) arranged and constructed to detect a touch thereon;
a processor (102) operably coupled to the display (112) and the input device (118) to display a preview of information from an application associated with the selectable feature without executing the application when the touch is associated with the selectable feature.

**12.** The electronic device (100) according to claim 11, wherein display of the preview is discontinued in response to the touch-sensitive input device (118) detecting an end of the touch.

**13.** The electronic device (100) according to claim 11, wherein the preview is displayed when continuation of the touch is detected and after feature information is displayed.

**14.** The electronic device (100) according to any one of claims 11 to 13, wherein the touch-sensitive input device (118) comprises one of a touch-sensitive overlay (114), a touch-sensitive track pad, and an optical joystick.

**15.** The electronic device (100) according to any one of claims 11 to 14, comprising an actuator (120), actuatable in response to a force applied to the touch-sensitive input device (118) that exceeds a threshold value.

**16.** The electronic device (100) according to any one of claims 11 to 15, wherein the application is executed by the processor (102) in response to actuation of an actuator (120).

**17.** The electronic device according to claim 11, comprising a memory having at least one record stored in relation to the application, the preview of information comprising information from the record.

**18.** The electronic device (100) according to claim 11, comprising a memory having at least one record stored in relation to the application, the preview of information comprising information from a field of at least one record.
